# EUROPEAN PATENT SPECIFICATION

(11) **EP 2 708 435 B1**
(45) Date of publication and mention of the grant of the patent: **27.05.2015**
(21) Application number: 12190993.1
(22) Date of filing: 01.11.2012
(51) Int. Cl.: B61D 19/02

(54) **Remote defect isolation device for vehicle doors and isolation method**
Vorrichtung zur ferngesteuerten Isolierung eines Defekts für Fahrzeugtüren und Isolierungsverfahren
Dispositif d'isolation de défaut à distance pour portes de véhicule et procédé d'isolement

(30) Priority: 14.09.2012 CN 201210341960
(43) Date of publication of application: 19.03.2014
(73) Proprietor: Nanjing Kangni Electronic Technology CO., Ltd., 210013 Nanjing Jiangsu (CN)
(72) Inventor: MAO, Fei, 210013 Nanjing (CN); YUAN, Na, 210013 Nanjing (CN); LU, Chi Yu, 210013 Nanjing (CN); ZHU, Zhi Yong, 210013 Nanjing (CN); HUANG, Tian Tai, 210013 Nanjing (CN); ZHANG, Mao Mao, 210013 Nanjing (CN); RONG, Hai Long, 210013 Nanjing (CN)
(74) Representative: Sun, Yiming

(56) References cited:
- EP-A1- 1 764 464
- US-B2- 8 042 773

## Description

### Technical Field

The present invention relates to a locking device of railway traffic vehicles, more specifically, a defective door isolation device for vehicle doors according to the characteristics of the preamble of independent apparatus claim 1. At the same time, the present invention discloses the isolation method of this invention.

### Background Art

In railway traffic vehicles, usually a door controller controls the closing of a vehicle door, and transmits the status and signal of the door, including the defective information of the vehicle door, to the vehicle control unit. If a defect occurs and the affected door must be isolated, the driver needs to find and to reach the defective door, manually close the door and then isolate it to terminate its service. As a result, if a defect repeatedly occurs on the train with a length of 100m or more, and many defective doors need to be isolated, this operation is time-consuming and could potentially cause other defects. In particular in the route where the vehicle operation time interval is short, this can result in delays and other serious problems.

A device according to the characteristics of the preamble of independent claim 1 is known from EP 1 764 464.

### Content of the Invention

The aim of the invention: to provide an effective vehicle door isolation device that can be remotely controlled. At the same time, the present invention relates to the isolation method of the present isolation device.

The technical solution: the invention is realised through the following technical means:

A remote defect isolation device for vehicle doors, characterised in that it comprises a remote isolation controller and an isolator. The isolator comprises an isolator body, a hook, a carrier and a cam. The remote isolation controller is installed near the isolator; the carrier is arranged on the vehicle door; the hook is arranged on the isolator body, with the carrier's position matching the hook; teeth are arranged on the outer rim of the cam and a gear is fixedly arranged in the lower part of the hook, wherein the teeth on the outer rim of the cam mesh with the gear.

A clamping device is also comprised. The clamping device comprises an iron core and an electromagnet arranged around the outside of the iron core. The clamping device also comprises a spring with one end of the spring being connected to the iron core and the other end being connected to the electromagnet. When the electromagnet is not energised, the spring partly draws the iron core out of the electromagnet. A groove is arranged on the cam. When the iron core is drawn out, the end of the iron core can stick in the groove.

A switch is also comprised, which is arranged on the isolator body. The isolator further comprises a plate spring, with one end of the plate spring being fixedly connected to the isolator body and the other end covering the switch. A recess is arranged on the cam. When the cam rotates to a position where the recess matches the plate spring, the plate spring sticks into the recess of the cam.

A steel wire rope is further comprised, with one end of the steel wire rope being connected to the cam and the other end going through out the isolator body.

A torsional spring is arranged on the camshaft.

An isolation method of the remote defect isolation device for vehicle doors, including the following steps:
(1) The electromagnet is energised; the iron core is drawn into the electromagnet, so that the end of the iron core becomes separated from the cam.
(2) The torsional spring on the camshaft turns the cam to rotate; the cam rotating turns the hook to rotate, so that the hook is released.
(3) The remote isolation controller closes the vehicle door that was not in the properly closing position.
(4) When the hook contacts the carrier, the hook hangs on the carrier and completes the locking.

In the above step (2), the rotation of the cam simultaneously presses the plate spring; the plate spring presses the switch, which creates the isolation signal.

The remote isolation controller is controlled by the vehicle-mounted system.

The isolation method further comprises a judging process. When the local door controller is not able to work properly, the defect isolator functions. Meanwhile, the remote isolation controller controls the electromotor to close the door.

An obstacle detecting step is also comprised. When an obstacle is detected by the door, the remote isolation controller opens the door for 0-1.6 m and stops the electromotor for 3-5 seconds and then detects again. If no obstacle is found, the door will be closed.

The beneficial effect: comparing to the state-of-the-art, the present invention can directly close and isolate defective doors to quickly terminate their service, by means of the remote control device. There is no need to reach every defective door, to manually operate the door closing and isolation. The structure is reasonable, the control principle is simply and reliable, time can be saved, working efficiency is improved and serious disruptions like passenger clearance can be avoided.

### Description of Drawings

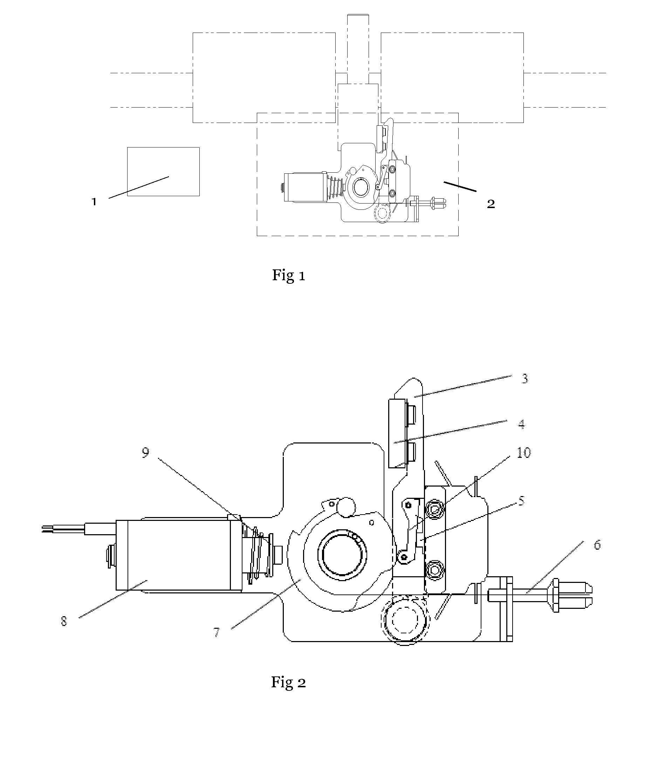

Fig. 1 is a structural schematic of the present invention
Fig. 2 is a structural schematic of the isolator in the present invention,

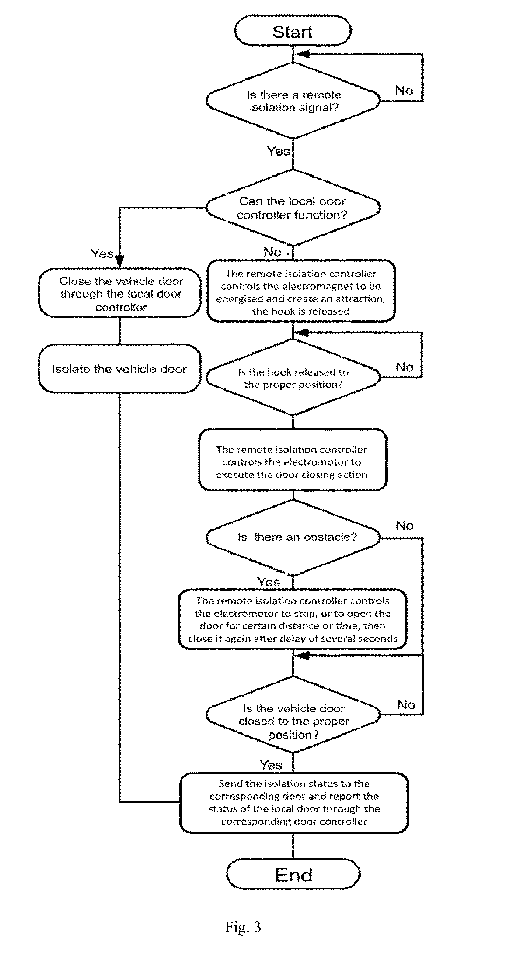

Fig. 3 is a workflow chart of the method in the present invention,
wherein 1-remote isolation controller, 2-isolator, 3-hook, 4-carrier, 5-switch, 6-steel wire rope, 7-cam, 8-electromagnet, 9-iron core, 10-plate spring.

### Detailed embodiments

The present invention will be explained in more detail below, in conjunction with the appended drawings:
The present invention relates to a remote defect isolation device for vehicle doors, comprising the remote isolation controller 1, the isolator 2 which comprises the isolator body, the hook 3, the carrier 4 and the cam 7. The remote isolation controller 1 is installed near the isolator 2; the carrier 4 is arranged on the vehicle door; the hook 3 is arranged on the isolator body, with the carrier 4's position matching the hook 3; teeth are arranged on the outer rim of the cam 7 and a gear is fixed in the lower part of the hook 3, wherein the teeth on the outer rim of the cam 7 mesh with the gear.

The present invention further comprises a clamping device. The clamping device comprises the iron core 9 and the electromagnet 8 arranged around the outside of the iron core 9. The clamping device also comprises the spring, with one end of the spring being connected to the iron core 9 and the other end being connected to the electromagnet 8. When the electromagnet 8 is not energised, the spring partly draws the iron core 9 out of the electromagnet 8. Correspondingly, the groove is arranged on the cam 7. When the iron core 9 is drawn out, its end can stick in the groove.

The present invention further comprises the switch 5. The switch 5 is arranged on the isolator body. The isolator further comprises the plate spring 10, with one end of the plate spring 10 being fixedly connected to the isolator body and the other end covering the switch 5. Correspondingly, the recess is arranged on the cam 7. When the cam 7 rotates to a position where the recess matches the plate spring 10, the plate spring 10 will stick into the recess of the cam. Otherwise, the plate spring 10 presses the switch 5.

The invention further comprises the steel wire rope 6, with one end of the steel wire rope 6 being connected to the cam 7 and the other end going through out the isolator body.

A torsional spring is arranged on the shaft of the cam 7 of the present invention. In the absence of external forces on the cam, it rotates to a position where the recess matches the plate spring 10.

The present invention also discloses an isolation method of the device, including the following steps:
(1) The electromagnet is energized; the iron core is drawn into the electromagnet, so that the end of the iron core becomes separated from the cam.
(2) The torsional spring turns the cam to rotate; the cam rotating turns the hook to rotate, so that the hook is released.
(3) The remote isolation controller closes the vehicle door that was not in the properly closing position.
(4) When the hook contacts the carrier, the hook hangs on the carrier and completes the locking.

In step (2), the rotation of the cam simultaneously presses the plate spring and the plate spring presses the switch, which creates the isolation signal.

The isolator in the present invention is controlled by the remote isolation controller. The remote isolation controller is installed near the isolator and is controlled by the vehicle-mounted system.

The isolation method in the present invention further comprises a judging process. The remote isolation control device firstly detects the status of the local controller. When the local door controller is not able to work properly, the defect isolator functions. Meanwhile, the remote isolation controller controls the electromotor to close the door.

The isolation method in the present invention further comprises an obstacle detecting step. When the remote device closes the door, if an obstacle is detected by the door, the remote isolation controller opens the door for 0-1.6m, then it stops the electromotor and detects again. If no obstacle is found, the door will be closed.

The present invention is explained by the following example:
In a normal status, the electromagnet is not energised. Under the effect of the spring, the iron core wedges into the groove on the cam and the cam is locked. The plate spring is also in the recess of the cam and the switch is released.

When a vehicle door defect occurs, the remote isolation controller issued an instruction. The electromagnet is energized and creates an attraction; the iron core withdraws along the axis and becomes separated from the groove of the cam. Under the effect of the torsional spring, the cam rotates and turns the gear in the lower part of the hook to rotate, and the hook and the carrier match to each other. The rotation of the cam simultaneously presses the plate spring, which leads the switch to be pressed and the isolation signal to be sent out. After the defect is eliminated, it is possible by rotating the cam's square shaft to drive and control the cam to rotate and be reset. The cam is controlled to force the hook to be reset. The iron core of the electromagnet stretches out along the axis, sticks in the recess of the control cam and completes the resetting. It is also possible to drive and to control the cam to be reset by pulling the steel wire rope that is connected to the cam.

## Claims

1. A remote defect isolation device for railway vehicle doors, capable of directly closing and isolating defective doors to quickly terminate their service, by means of remote control device, whereby it comprises a remote isolation controller (1), an isolator (2), wherein the remote isolation controller (1) is installed near the isolator (2),
**characterized in that** the isolator (2) comprises an isolator body, a hook (3), a carrier (4) and a cam (7), wherein the carrier (4) is capable of being arranged on the door, wherein the hook (3) is arranged on the isolator body, with the position of the carrier (4) matching the hook (3), wherein teeth are arranged on the outer rim of the cam (7) and a gear is fixedly arranged in the lower part of the hook (3), wherein the teeth on the outer rim of the cam (7) mesh with the gear.

2. The remote defect isolation device for vehicle doors according to claim 1, **characterised in that** the isolator further comprises a clamping device, wherein the clamping device comprises an iron core (9) and an electromagnet (8), wherein the electromagnet (8) is arranged around the outside of the iron core (9), wherein the clamping device also comprises a spring, with one end of the spring being connected to the iron core (9) and the other end being connected to the electromagnet (8), wherein in the case of the electromagnet (8) not being energised, the spring partly draws the iron core (9) out of the electromagnet (8), wherein a groove is arranged on the cam (7), wherein in case of the iron core (9) being drawn out, the end of the iron core (9) sticks in the groove.

3. The remote defect isolation device for vehicle doors according to claim 1, **characterised in that** it further comprises a switch (5), wherein the switch (5) is arranged on the isolator body, wherein the isolator further comprises a plate spring (10), with one end of the plate spring (10) being fixedly connected to the isolator body and the other end covering the switch (5), wherein a recess is arranged on the cam (7), wherein in case of the cam (7) rotating to a position where the recess matches the plate spring (10), the plate spring (10) sticks into the recess of the cam (7).

4. The remote defect isolation device for vehicle doors according to claim 1, **characterised in that** it further comprises a steel wire rope (6), with one end of the steel wire rope (6) being connected to the cam (7) and the other end going through out the isolator body.

5. The remote defect isolation device for vehicle doors according to claim 1, **characterised in that** a torsional spring is arranged on the shaft of the cam (7).

6. An isolation method of the remote defect isolation device for vehicle doors according to claim 2, **characterised in that** it includes the following steps:
(1) the electromagnet is energised, the iron core is drawn into the electromagnet, so that the end of the iron core becomes separated from the cam;
(2) the torsional spring on the camshaft turns the cam to rotate, the cam rotating turns the hook to rotate, so that the hook is released;
(3) the remote isolation controller closes the vehicle door that was not in the properly closing position;
(4) when the hook contacts the carrier, the hook hangs on the carrier and completes the locking;
in step (2), the rotation of the cam simultaneously presses down the plate spring, wherein the plate spring presses down the switch, which sends out the isolation signal.

7. The isolation method according to claim 6, **characterised in that** the remote isolation controller is controlled by the vehicle-mounted system.

8. The isolation method according to claim 6, **characterised in that** the isolation method further comprises a judging process, wherein in case of the local door controller not being able to work properly, the defect isolator functions, meanwhile, the remote controller controls the electromotor to close the door.

9. The isolation method according to claim 6, **characterised in that** the method further comprises an obstacle detecting step, wherein in case of an obstacle being detected by the door, the remote isolation controller opens the door for 0-1.6 m and stops the electromotor for 3-5 seconds and then detects again, if no obstacles, closes the door.

## Patentansprüche

1. Vorrichtung zur ferngesteuerten Isolierung eines Defekts für Eisenbahnfahrzeugtüren, welche defekte Türen mittels einer Fernsteuerungsvorrichtung unmittelbar verschließen und isolieren können, um zügig deren Betrieb zu beenden, wobei sie ein Steuergerät zur ferngesteuerten Isolierung (1), einen Isolator (2) aufweist, wobei das Steuergerät zur ferngesteuerten Isolierung (1) in der Nähe des Isolators (2) installiert ist,
**dadurch gekennzeichnet, dass**
der Isolator (2) einen Isolatorkörper, einen Haken (3), einen Träger (4) und einen Nocken (7) aufweist, wobei der Träger (4) an der Tür angeordnet werden kann, wobei der Haken (3), auf dem Isolatorkörper angeordnet ist, wobei die Position des Trägers (4) mit dem Haken (3) übereinstimmt, wobei Zähne am äußeren Rand des Nockens (7) angeordnet sind und ein Zahnrad im unteren Teil des Hakens (3) fest angeordnet ist, wobei die Zähne am äußeren Rand des Nockens (7) mit dem Zahnrad im Eingriff stehen.

2. Vorrichtung zur ferngesteuerten Isolierung eines Defekts für Fahrzeugtüren nach Anspruch 1,
**dadurch gekennzeichnet, dass** der Isolator ferner eine Spannvorrichtung aufweist, wobei die Spannvorrichtung einen Eisenkern (9) und einen Elektromagnet (8) aufweist, wobei der Elektromagnet (8) um die Außenseite des Eisenkerns (9) angeordnet ist, wobei die Spannvorrichtung auch eine Feder aufweist, wobei ein Ende der Feder mit dem Eisenkern (9) verbunden ist und das andere Ende mit dem Elektromagnet (8) verbunden ist, wobei, falls der Elektromagnet (8) nicht mit Energie versorgt ist, die Feder den Eisenkern (9) teilweise aus dem Elektromagneten (8) herauszieht, wobei eine Nut am Nocken (7) angeordnet ist, wobei, falls der Eisenkern (9) herausgezogen ist, das Ende des Eisenkerns (9) in der Nut verbleibt.

3. Vorrichtung zur ferngesteuerten Isolierung eines Defekts für Fahrzeugtüren nach Anspruch 1,
**dadurch gekennzeichnet, dass** sie ferner einen Schalter (5) aufweist, wobei der Schalter (5) auf dem Isolatorkörper angeordnet ist, wobei der Isolator ferner eine Blattfeder (10) aufweist, wobei ein Ende der Blattfeder (10) mit dem Isolatorkörper starr verbunden ist und das andere Ende den Schalter (5) abdeckt, wobei eine Aussparung am Nocken (7) angeordnet ist, wobei, falls sich der Nocken (7) zu einer Position dreht, wo die Aussparung mit der Blattfeder (10) übereinstimmt, die Blattfeder (10) in die Aussparung des Nockens (7) eingreift.

4. Vorrichtung zur ferngesteuerten Isolierung eines Defekts für Fahrzeugtüren nach Anspruch 1,
**dadurch gekennzeichnet, dass** sie ferner ein Stahldrahtseil (6) aufweist, wobei ein Ende des Stahldrahtseils (6) mit dem Nocken (7) verbunden ist und das andere Ende durch den Isolatorkörper hindurch verläuft.

5. Vorrichtung zur ferngesteuerten Isolierung eines Defekts für Fahrzeugtüren nach Anspruch 1,
**dadurch gekennzeichnet, dass** eine Drehfeder an der Welle des Nockens (7) angeordnet ist.

6. Verfahren zur ferngesteuerten Isolierung eines Defekts für Fahrzeugtüren nach Anspruch 2,
**dadurch gekennzeichnet, dass** es folgende Schritte umfasst:
(1) der Elektromagnet wird mit Energie versorgt, der Eisenkern wird in den Elektromagnet gezogen, so dass das Ende des Eisenkerns vom Nocken getrennt wird;
(2) die Drehfeder an der Nockenwelle dreht den Nocken, der rotierende Nocken dreht den Haken, so dass der Haken freigegeben wird;
(3) das Steuergerät zur ferngesteuerten Isolierung verschließt die Fahrzeugtür, die nicht in der korrekten Schließstellung war;
(4) wenn der Haken in Kontakt mit dem Träger kommt, der Haken hängt sich am Träger und schließt die Verriegelung ab;
in Schritt (2) drückt die Rotation des Nockens gleichzeitig die Blattfeder nieder, wobei die Blattfeder den Schalter niederdrückt, welcher das Isolierungssignal aussendet.

7. Isolierungsverfahren nach Anspruch 6, **dadurch gekennzeichnet, dass** das Steuergerät zur ferngesteuerten Isolierung durch das im Fahrzeug installierte System gesteuert wird.

8. Isolierungsverfahren nach Anspruch 6, **dadurch gekennzeichnet, dass** das Isolierungsverfahren ferner einen Auswertungsprozess aufweist, wobei, falls die lokale Türsteuerungseinrichtung nicht ordnungsgemäß arbeiten kann, der Defekt-Isolator funktioniert; in der Zwischenzeit steuert die Fernsteuerungseinrichtung den Elektromotor, um die Tür zu schließen.

9. Isolierungsverfahren nach Anspruch 6, **dadurch gekennzeichnet, dass** das Verfahren ferner einen Hindernisdetektionsschritt aufweist, wobei, falls ein Hindernis durch die Tür detektiert wird, das Steuergerät zur ferngesteuerten Isolierung die Tür um 0-1,6 m öffnet und den Elektromotor für 3-5 Sekunden abschaltet und anschließend nochmals einen Erfassungsvorgang ausführt und, falls kein Hindernis gefunden wird, die Tür verschließt.

## Revendications

1. Dispositif d'isolation de défaut à distance pour portes de véhicules ferroviaires capable de fermer et isoler directement les portes défectueuses afin de rapidement arrêter leur fonctionnement au moyen d'un dispositif de commande à distance, étant donné que il comprend un contrôleur d'isolation à distance (1), un isolateur (2), dans lequel le contrôleur d'isolation à distance (1) est installé près de l'isolateur (2),
**caractérisé en ce que**
l'isolateur (2) comprend un corps d'isolateur, un crochet (3), un support (4) et une came (7), étant donné que le support (4) peut être disposé sur la porte, étant donné que le crochet (3) est disposé sur le corps d'isolateur, la position du support (4) correspondant au crochet (3), étant donné que des dents sont disposées sur le bord extérieur de la came (7) et qu'un engrenage est disposé de manière stationnaire dans la partie inférieure du crochet (3), étant donné que les dents situées sur le bord extérieur de la came (7) s'engrènent avec l'engrenage.

2. Dispositif d'isolation de défaut à distance pour portes de véhicules selon la revendication 1,
**caractérisé en ce que** l'isolateur comprend en outre un dispositif de serrage, étant donné que le dispositif de serrage comprend un noyau de fer (9) et un électro-aimant (8), étant donné que l'électro-aimant (8) est disposé autour de l'extérieur du noyau de fer (9), étant donné que le dispositif de serrage comprend également un ressort, une extrémité du ressort étant reliée au noyau de fer (9) et l'autre extrémité étant reliée à l'électro-aimant (8), étant donné que dans le cas où l'électro-aimant (8) n'est pas alimenté en énergie, le ressort tire partiellement le noyau de fer (9) hors de l'électro-aimant (8), étant donné qu'une rainure est disposée sur la came (7), étant donné que, dans le cas où le noyau de fer (9) est retiré, l'extrémité du noyau de fer (9) reste dans la rainure.

3. Dispositif d'isolation de défaut à distance pour portes de véhicules selon la revendication 1,
**caractérisé en ce qu'**il comprend en outre un commutateur (5), étant donné que le commutateur (5) est disposé sur le corps d'isolateur, étant donné que l'isolateur comprend en outre un ressort à lames (10), une extrémité du ressort à lames (10) étant reliée de manière fixe au corps d'isolateur et l'autre extrémité couvrant le commutateur (5), étant donné qu'une encoche est disposée sur la came (7), étant donné que, dans le cas où la came (7) tourne à une position où l'encoche correspond au ressort à lames (10), le ressort à lames (10) prend dans l'encoche de la came (7).

4. Dispositif d'isolation de défaut à distance pour portes de véhicules selon la revendication 1,
**caractérisé en ce qu'**il comprend en outre un câble en fil d'acier (6), une extrémité du câble en fil d'acier (6) étant reliée à la came (7) et l'autre extrémité traversant le corps d'isolateur.

5. Dispositif d'isolation de défaut à distance pour portes de véhicules selon la revendication 1,
**caractérisé en ce qu'**un ressort de torsion est disposé sur l'arbre de la came (7).

6. Procédé d'isolation de défaut à distance pour portes de véhicules selon la revendication 2,
**caractérisé en ce qu'**il comprend les étapes suivantes :
(1) l'électro-aimant est alimenté en énergie, le noyau de fer est tiré dans l'électro-aimant de manière à ce que l'extrémité du noyau de fer se sépare de la came ;
(2) le ressort de torsion situé sur l'arbre à cames amène la came à tourner, la came en rotation amène le crochet à tourner de telle sorte que le crochet soit libéré ;
(3) le contrôleur d'isolation à distance ferme la porte du véhicule qui n'était pas dans la position de fermeture correcte ;
(4) lorsque le crochet entre en contact avec le support, le crochet s'accroche sur le support et complète le verrouillage ;
à l'étape (2), la rotation de la came presse simultanément sur le ressort à lames, étant donné que le ressort à lames appuie sur le commutateur qui émet le signal d'isolation.

7. Procédé d'isolation selon la revendication 6, **caractérisé en ce que** le contrôleur d'isolation à distance est commandé par le système monté sur le véhicule.

8. Procédé d'isolation selon la revendication 6, **caractérisée en ce que** le procédé d'isolation comprend en outre un processus d'évaluation, étant donné que, dans le cas où le contrôleur de porte local n'est pas en mesure de fonctionner correctement, l'isolateur de défaut fonctionne ; entretemps, la commande à distance commande au moteur électrique de fermer la porte.

9. Procédé d'isolation selon la revendication 6, **caractérisé en ce que** le procédé comprend en outre une étape de détection d'obstacle, étant donné que, dans le cas où un obstacle est détecté par la porte, le contrôleur d'isolation à distance ouvre la porte de 0-1,6 m et arrête le moteur électrique pendant 3-5 secondes, puis scrute de nouveau et, s'il n'existe aucun obstacle, ferme la porte.
